# EUROPEAN PATENT APPLICATION

(11) **EP 4 786 745 A1**
(43) Date of publication of application: **05.08.2026**
(21) Application number: 26155588.2
(22) Date of filing: 30.01.2026
(51) Int. Cl.: F01D 17/02, F01D 21/00, G01B 7/14

(54) **EXTERNALLY SOURCED COOLING FOR PROBE AND LEAD AND METHOD OF DELIVERY**

(30) Priority: 30.01.2025 US 202519041780
(71) Applicant: RTX Corporation, Farmington, CT 06032 (US)
(72) Inventor: HACKETT, Bryan James, Berlin, 06037 (US); DREGER, Edward F., Burlington, 06013 (US); WARREN, Eli, Bend, 97703-8475 (US); HARRINGTON, Patrick M., Niantic, 06357 (US); TOMICK, Hunter, Lebanon, 06249 (US)
(74) Representative: Dehns

(57) **Abstract**

A probe assembly (100; 300) includes a cup (102; 302) including at least one cooling outlet (104; 304), and a cap (106; 306) including an inlet, the cap (106; 306) affixed to the cup (102; 302). The probe assembly (100; 300) also includes hypo tubing (108; 308) affixed to the inlet, and a probe (110; 310) disposed within an interior volume of the cup (102; 302) and the cap (106; 306), the probe (110; 310) including a lead (112; 312) at least partially disposed within the hypo tubing (108; 308).

## Description

### TECHNICAL FIELD

This disclosure generally relates to gas turbine engines. More specifically, this disclosure relates to externally sourced cooling for probes and leads and methods of delivery.

### BACKGROUND

Existing probe cooling arrangements may include flutes or holes around the circumference of the probe body allowing cool high pressure compressor (HPC) air to flow from the backside of the Blade Outer Air Seal (BOAS) to the gas path thereby cooling the probe body. However, this cooling does not help to keep debris off the face of the probe because the HPC air flows straight into the gas-path.

### SUMMARY

This disclosure relates to externally sourced cooling for probes and leads and methods of delivery.

In an aspect of the present invention, a probe assembly may include a cup including at least one cooling outlet, and a cap including an inlet, the cap affixed to the cup. The probe assembly may also include hypo tubing affixed to the inlet, and a probe disposed within an interior volume of the cup and the cap, the probe including a lead at least partially disposed within the hypo tubing.

In another aspect of the present invention, a method of cooling a probe assembly may include supplying, via hypo tubing, a flow of cooling gas into an inlet of a cap such that the cooling gas flows into the inlet, around a probe, and exits through at least one cooling outlet of a cup.

In another aspect of the present invention, an assembly includes a gas turbine engine component, and a probe assembly affixed to the gas turbine engine component. The probe assembly may be configured to receive a flow of a cooling gas from a source separate from a gas turbine engine.

Any single one or any combination of the following features may be used with the above examples. The probe may be a blade tip clearance (BTC) probe. The cup may be affixed to the cap. The cup may be affixed to the cap by at least one of brazing or welding. The hypo tubing may be affixed to the inlet. The inlet may disposed at a rear of the cap. The inlet may be disposed at a side of the cap. The probe may be disposed within an interior volume of the cup and the cap. The probe may include a lead at least partially disposed within the hypo tubing. The probe assembly may further include a blade outer air seal (BOAS). The cup may be affixed to the BOAS. The cup may be affixed to the BOAS by at least one of brazing or welding. The probe assembly may be configured to receive, via the hypo tubing, a flow of cooling gas. The cooling gas may flow into the inlet, around the probe, and exit through the at least one cooling outlet. The cooling gas may be received from a source separate from an engine under measurement by the probe. The gas turbine engine component may be a blade outer air seal (BOAS). The probe assembly may be a blade tip clearance BTC probe assembly.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURES 1A-1B illustrate an example probe assembly 100 in accordance with this disclosure;
FIGURES 2A-2B illustrate an example assembly 200 in accordance with this disclosure;
FIGURES 3A-3C illustrate another example probe assembly 300 in accordance with this disclosure; and
FIGURES 4A-4B illustrate another example assembly 400 in accordance with this disclosure.

### DETAILED DESCRIPTION

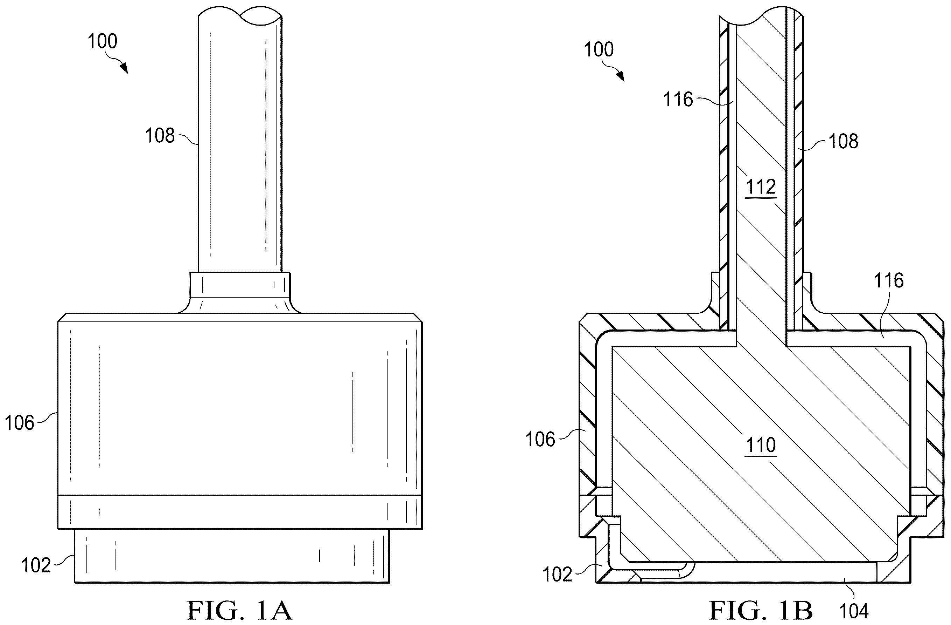

FIGURES 1A through 4B, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

Engine development programs for gas turbine engines often obtain Blade Tip Clearance (BTC) data in hot sections, i.e., post combustion turbine stages. Most capacitance-based BTC probes are limited to temperatures below 2270 degrees Fahrenheit due to material limitations. As noted above, existing probe cooling arrangements may include flutes or holes around the circumference of the probe body allowing cool high pressure compressor (HPC) air to flow from the backside of the Blade Outer Air Seal (BOAS) to the gas path thereby cooling the probe body. However, this cooling does not help to keep debris off the face of the probe because the HPC air flows straight into the gas-path. Except for the immediate area surrounding these holes that are conductively cooled, the remainder of the probe face is subjected to gas-path temperature which increases the likelihood of debris depositing on the face of the probe, which can cause electrical performance degradation. Another problem encountered when welding a BTC probe to an outer air seal is the material mis-match and/or inability to heat treat welds.

One solution for keeping turbine BTC probes within operational limits is to redirect secondary (non-main gas path) air across the face of the probe utilizing existing pressure differential. This air is typically sourced via compression bleed ports and in a non-development engine the bleeds are sized for keeping turbine parts (BOAS, blades, vanes etc.) within operational limits. When that same air is used for instrument cooling the thermal/structural margins for engine parts reduce. If a threshold is breached where margin is no longer present, introducing another cooling/purge source to keep the probes within limits and without affecting engine hardware limits is desirable.

Various embodiments of the present disclosure provide a probe assembly configured to receive cooling from a foreign source (i.e., a source other than the engine under measurement). For example, some embodiments include a coaxial arrangement of a probe lead and a cooling jacket to provide a flow of a cooling gas (e.g., compressed air) to the probe. This arrangement provides a cooling flow to the probe lead as well as the back of the probe. Some embodiments may also include an interstitial shroud (i.e., a "cap"), and a purge/cooling cup. Various benefits provided by embodiments of the present disclosure include cooling of the probe lead, cooling of the probe including the face, and purging the probe face from debris. Furthermore, interstitial parts such as cups, caps, etc. provide an opportunity for optimized welds. Additionally, using a foreign source for the cooling gas (e.g., a compressed air tank), decreases the risk of starving the BOAS of domestic (i.e., engine generated) cooling.

FIGURES 1A-1B illustrate an example probe assembly 100 in accordance with this disclosure. In particular, FIGURE 1A illustrates a side view of probe assembly 100, while FIGURE 1B illustrates a cutaway side view of probe assembly 100. In the example of FIGURES 1A-1B, probe assembly 100 includes a cup 102 that includes at least one cooling outlet 104. Cup 102 is affixed (e.g., via brazing or welding) to cap 106. When assembled, cup 102 and cap 106 form a void within which probe 110 (which may be, for example, a BTC probe) is disposed. Probe 110 includes a lead 112 which provides electrical communication between probe 110 and an external component (e.g., a controller, a data acquisition device, etc.). Lead 112 passes through an inlet of cap 106 at a rear of cap 106. Coupled to the inlet of cap 106, and running coaxially with lead 112 is hypo tubing 108.

Probe assembly 100 is configured to receive, via the hypo tubing 108, a flow of a cooling gas, wherein the cooling gas flows into the inlet and around probe 110 via cooling passages 116, and exits through the at least one cooling outlet 104. In this manner, hypo tubing 108 serves as a cooling jacket for lead 112, and as a source of cooling for probe 110.

Although FIGURES 1A-1B illustrate an example probe assembly 100, various changes could be made to FIGURES 1A-1B. For example, while probe assembly 100 is depicted as having a particular size and shape, probe assembly 100 may be of any size or shape. Similarly, while probe assembly 100 is described as a BTC probe assembly, probe assembly 100 may be any type of probe.

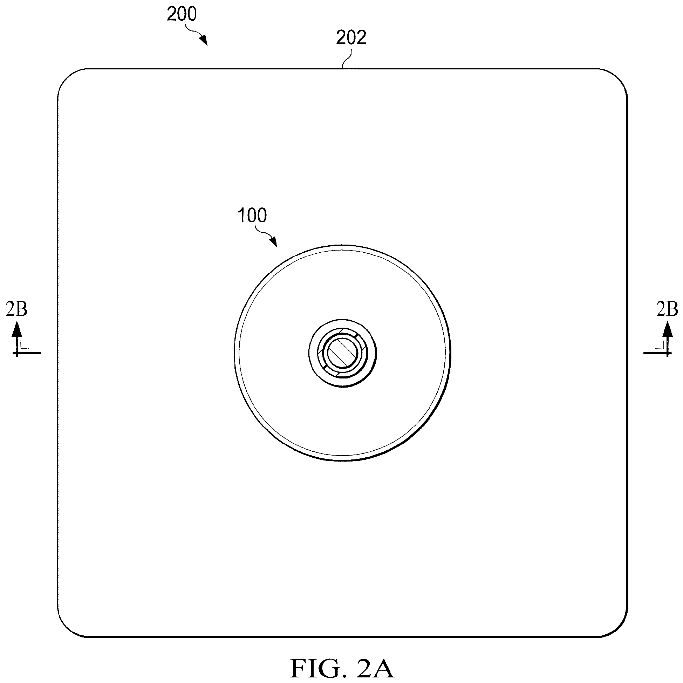

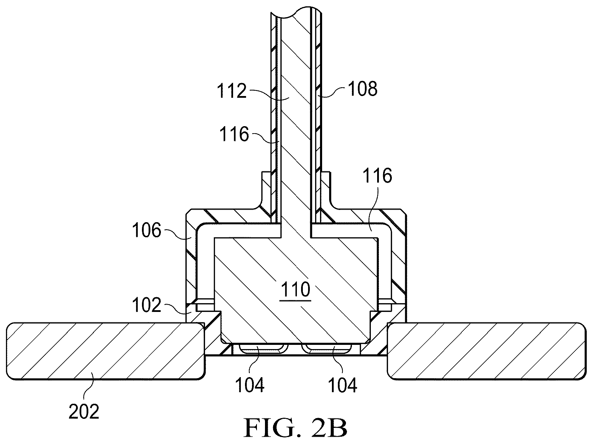

FIGURES 2A-2B illustrate an example assembly 200 in accordance with this disclosure. In particular, FIGURE 2A illustrates on overhead view of assembly 200, while FIGURE 2B illustrates a cutaway side view of assembly 200. Assembly 200 includes a gas turbine engine component 202 (e.g., a BOAS) to which probe assembly 100 is affixed (e.g., by brazing or welding cup 102 to component 202).

During operation, cooling gas flow through probe assembly 100 exits the at least one cooling outlet 104, preventing contamination of probe 110 via contaminants in the gas path of component 202 exposed to probe assembly 100.

Although FIGURES 2A-2B illustrate an example assembly 200, various changes could be made to FIGURES 2A-2B. For example, while assembly 200 is described as a BOAS with an affixed BTC probe assembly, assembly 200 could be any gas turbine engine component with any type of probe affixed.

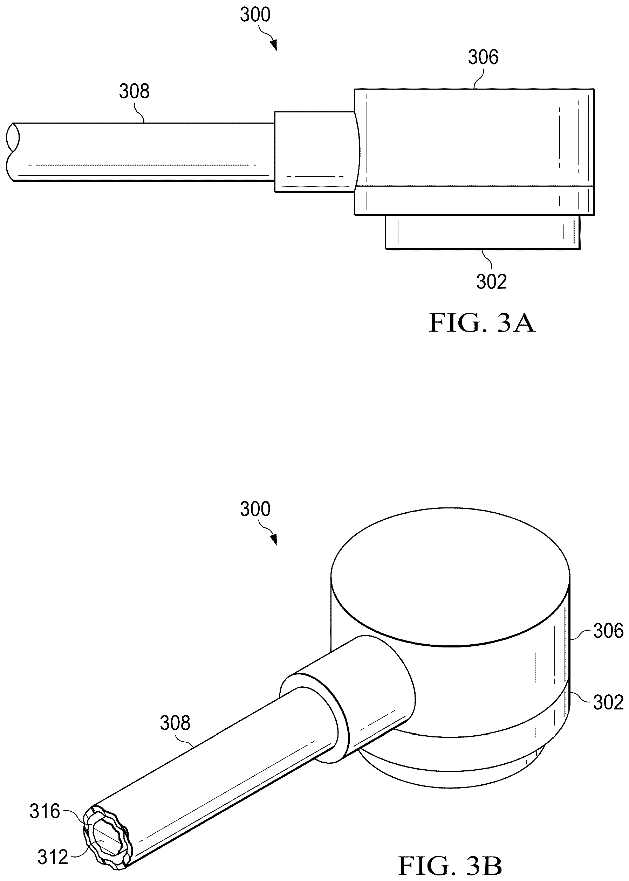

As noted above, a probe assembly such as probe assembly 100 may have different shapes or configurations. For example, probe assembly 100 could be reconfigured such that the probe lead and hypo tubing interface with a different portion (e.g., a side) of the cap, such as shown in FIGURES 3A-3C. This may provide for more convenient routing of the probe assembly.

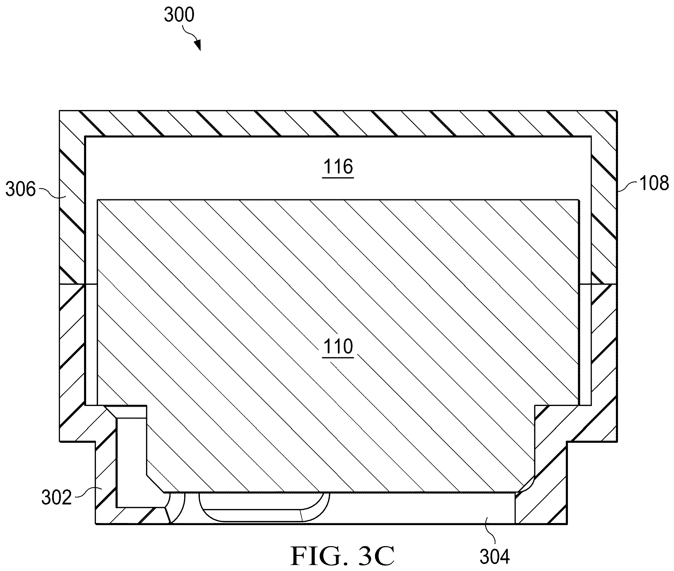

FIGURES 3A-3C illustrate another example probe assembly 300 in accordance with this disclosure. In particular, FIGURE 3A illustrates a side view of probe assembly 300, FIGURE 3B illustrates a perspective view of probe assembly 300, and FIGURE 3C illustrates a cutaway side view of probe assembly 300. In the example of FIGURES 3A-3C, probe assembly 300 includes a cup 302 that includes at least one cooling outlet 304. Cup 302 is affixed (e.g., via brazing or welding) to cap 306. When assembled, cup 302 and cap 306 form a void within which probe 310 (which may be, for example, a BTC probe) is disposed. Probe 310 includes a lead 312 which provides electrical communication between probe 310 and an external component (e.g., a controller, a data acquisition device, etc.). Lead 312 passes through an inlet of cap 306 at a side of cap 306. Coupled to the inlet of cap 306, and running coaxially with lead 312 is hypo tubing 308.

Probe assembly 300 is configured to receive, via hypo tubing 308, a flow of a cooling gas, wherein the cooling gas flows into the inlet and around the probe 310 via cooling passages 316, and exits through the at least one cooling outlet 304. In this manner, hypo tubing 308 serves as a cooling jacket for lead 312, and as a source of cooling for probe 310.

Although FIGURES 3A-3C illustrate an example probe assembly 300, various changes could be made to FIGURES 3A-3C. For example, while probe assembly 300 is depicted as having a particular size and shape, probe assembly 300 may be of any size or shape. Similarly, while probe assembly 300 is described as a BTC probe assembly, probe assembly 300 may be any type of probe.

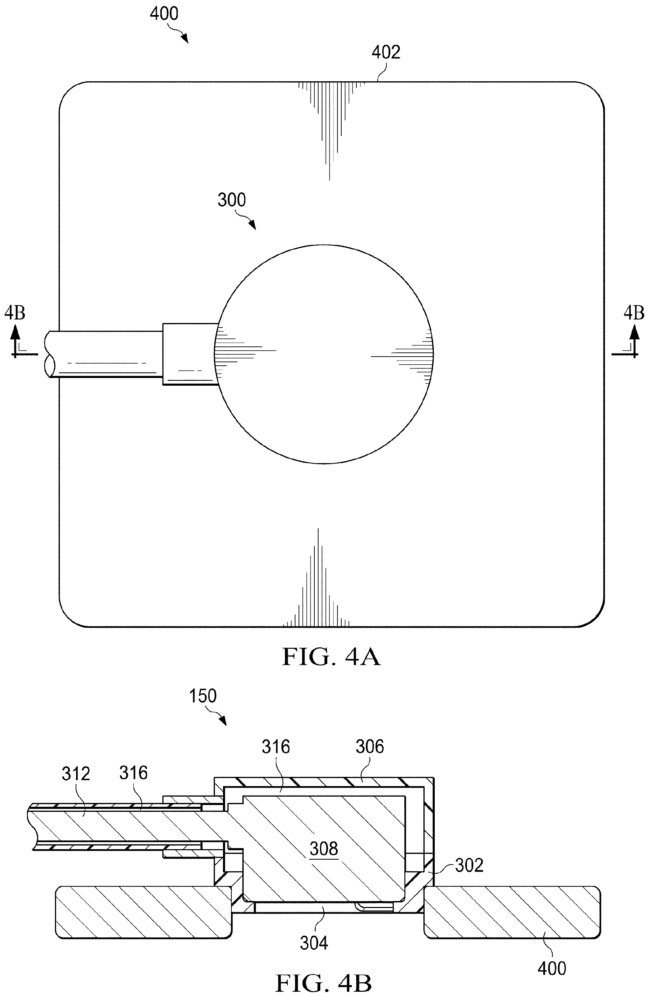

FIGURES 4A-4B illustrate another example assembly 400 in accordance with this disclosure. In particular, FIGURE 4A illustrates on overhead view of assembly 400, while FIGURE 4B illustrates a cutaway side view of assembly 400. Assembly 400 includes a gas turbine engine component 402 (e.g., a BOAS) to which probe assembly 300 is affixed (e.g., by brazing or welding cup 302 to component 402).

During operation, cooling gas flow through probe assembly 300 exits the at least one cooling outlet 304, preventing contamination of probe 310 via contaminants in the gas path of component 402 exposed to probe assembly 300.

Although FIGURES 4A-4B illustrate an example assembly 400, various changes could be made to FIGURES 4A-4B. For example, while assembly 400 is described as a BOAS with an affixed BTC probe assembly, assembly 400 could be any gas turbine engine component with any type of probe affixed.

It may be advantageous to set forth definitions of certain words and phrases used throughout this patent document. The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A probe assembly (100; 300) comprising:
a cup (102; 302) including at least one cooling outlet (104; 304);
a cap (106; 306) including an inlet, the cap (106; 306) affixed to the cup (102; 302);
hypo tubing (108; 308) affixed to the inlet; and
a probe (110; 310) disposed within an interior volume of the cup (102; 302) and the cap (106; 306), the probe (110; 310) including a lead (112; 312) at least partially disposed within the hypo tubing (108; 308).

2. The probe assembly (100; 300) of Claim 1, wherein the probe (110; 310) is a blade tip clearance (BTC) probe (110; 310).

3. The probe assembly (100; 300) of Claim 1 or 2, wherein the cup (102; 302) is affixed to the cap (106; 306) by at least one of brazing or welding.

4. The probe assembly (100; 300) of Claim 1, 2 or 3, wherein the inlet is disposed at a rear of the cap (106; 306) or a side of the cap (106; 306).

5. The probe assembly (100; 300) of any preceding claim, further comprising a blade outer air seal (BOAS) (202; 402), wherein the cup (102; 302) is affixed to the BOAS (202; 402), optionally wherein the cup (102; 302) is affixed to the BOAS (202; 402) by at least one of brazing or welding.

6. The probe assembly (100; 300) of any preceding claim, wherein the probe assembly (100; 300) is configured to receive, via the hypo tubing (108; 308), a flow of cooling gas, wherein the cooling gas flows into the inlet, around the probe (110; 310), and exits through the at least one cooling outlet (104; 304), optionally wherein the cooling gas is received from a source separate from an engine under measurement by the probe (110; 310).

7. A method of cooling a probe assembly (100; 300), the method comprising:
supplying, via hypo tubing (108; 308), a flow of cooling gas into an inlet of a cap (106; 306) such that the cooling gas flows into the inlet, around a probe (110; 310), and exits through at least one cooling outlet (104; 304) of a cup (102; 302).

8. The method of Claim 7, wherein:
the cap (106; 306) is affixed to the cup (102; 302);
the hypo tubing (108; 308) is affixed to the inlet; and
the probe (110; 310) is disposed within an interior volume of the cup (102; 302) and the cap (106; 306), the probe (110; 310) including a lead (112; 312) at least partially disposed within the hypo tubing (108; 308).

9. The method of Claim 7 or 8, wherein the probe (110; 310) is a blade tip clearance (BTC) probe (110; 310).

10. The method of Claim 7, 8 or 9, wherein the cup (102; 302) is affixed to the cap (106; 306) by at least one of brazing or welding.

11. The method of any of Claims 7 to 10, wherein the inlet is disposed at a rear of the cap (106; 306) or a side of the cap (106; 306).

12. The method of any of Claims 7 to 11, wherein the cup (102; 302) is affixed to a blade outer air seal (BOAS) (202; 402), optionally wherein the cup (102; 302) is affixed to the BOAS (202; 402) by at least one of brazing or welding.

13. The method of any of Claims 7 to 12, wherein the cooling gas is supplied from a source separate from an engine under measurement by the probe (110; 310).

14. An assembly (200; 400) comprising:
a gas turbine engine component (202; 402); and
a probe assembly (100; 300), such as the probe assembly of claim 1, affixed to the gas turbine engine component (202; 402), the probe assembly (100; 300) configured to receive a flow of a cooling gas from a source separate from a gas turbine engine.

15. The assembly (200; 400) of Claim 14, wherein:
the gas turbine engine component (202; 402) is a blade outer air seal (BOAS); and
the probe assembly (100; 300) is a blade tip clearance (BTC) probe assembly (100; 300).
